# EUROPEAN PATENT SPECIFICATION

(11) **EP 0 809 929 B1**
(45) Date of publication and mention of the grant of the patent: **13.03.2002**
(21) Application number: 97610019.8
(22) Date of filing: 28.05.1997
(51) Int. Cl.: A01D 34/73

(54) **A knife holder for a mower**
Messerhalterung für Mäher
Fixation de lame pour faucheuse

(30) Priority: 29.05.1996 DK 61296
(43) Date of publication of application: 03.12.1997
(73) Proprietor: JF-FABRIKEN - J. FREUDENDAHL A/S, DK-6400 Sonderborg (DK)
(72) Inventor: Freudendahl, Jorn, 6400 Sonderborg (DK); Nielsen, Harald Raun, 6470 Sydals (DK)
(74) Representative: Raffnsöe, Knud Rosenstand

(56) References cited:
- EP-A- 0 717 921
- FR-A- 2 138 637
- FR-A- 2 520 577
- FR-A- 2 575 242
- GB-A- 2 001 836
- NL-A- 8 602 608
- US-A- 3 662 529

## Description

The present invention relates to a knife holder for a disc mower, said knife holder comprising a shaft for the mounting of a knife, said shaft being retained or tightened by a resilient means against a base, the shaft being sufficiently movable away from the base to make an exchange of knife possible by stressing of the resilient means with a tool, said knife being removable from the shaft only in a position in which it is turned away from its operating position,.

A knife holder of the above type is known from DE-A-2043264 and from disc mowers sold by KRONE.

Another known knife holder for use in a mower is a shaft, for instance a bolt, fastened at one end to a rotating knife disc and at the other end provided with a conventional nut. With a knife holder of this type it is, however, difficult to exchange knives without the use of special tools. To this may be added that adjustment of the height of the knife may be necessary after mounting of the new knife.

EP-A-0 717 921 is a prior art publication under Article 54(3) EPC and discloses a disc of a mower with a hole for inserting a rod shaped tool for pressing down a leaf spring carrying a mounting shaft for a knife. The rod shaped tool carries a cross pin which abuts the lower surface side of the disc while an edge of the hole acts as a stop for the tool to prevent it from skidding (away from the shaft) when the tool is used.

A drawback of the knife holder according to the above-mentioned German published specification and the disc mower sold by KRONE is that the tool to be used to stress the resilient means (preferably a leaf spring), at the exchange of knives, often tends to skid and be pressed out towards the edge of the knife and to press against it, such that the removal of the knife is made difficult. This problem is enhanced from the fact that the leaf spring, in the areas in which the tool abuts, during use often is covered by humid plant remnants which contributes to making the surface of the leaf spring slippery.

The object of the present invention is to provide a knife holder, which does not suffer from the above-mentioned drawback and which makes an easy and quick exchange of knives possible.

This object is met by means of a knife holder of the type mentioned by way of introduction in that the knife holder is provided with a stop preventing the tool under the influence of the resilient means from substantially skidding and being pressed towards the edge of the knife.

To ensure that the knife is retained in its position relative to the base, the shaft preferably comprises a head and the base is preferably provided with a hole corresponding to the head of the shaft with the purpose of receiving said head.

In a mower, the base usually comprises a rotatable knife disc and a stop plate provided thereon, said stop plate being designed such that the shaft head may be accommodated in a hole therein. The stop plate is preferably mounted in such a way on the knife disc that an edge of the stop plate constitutes a stop for the tool. If desired, the stop plate may be lowered by means of a countersink-block.

To avoid an undesirable loss of knives during use of the mower, the shaft is preferably designed such that the knife may only be dismantled in a position, in which it is turned away from its operating position, in particular a position turned approx. 90° relative to the operational position of the knife. In view of this the hole in the knife is, therefore, of double D-shape and the shaft head has a shape corresponding thereto, the shaft head being turned relative to the knife hole in such a way that the knife may only be removed when it is turned away from the operational position. The area of the shaft, in which the knife is present during operation, is preferably constituted by a substantially circular recess.

The tool, which is to be used for the stressing of the resilient means, should be designed in such a way that it is possible to insert the active part thereof, the so-called tool-head, in a space between the resilient means and the base. The head may preferably have an oblong cross-section, for instance in the shape of a rectangle or an ellipse, the width being bigger than the distance between the resilient means and the base. The tool may then influence the resilient means by a turning of the head. A sufficient force for an easy turning may be established by providing the tool head with an arm of desired length. The tool head is advantageously constructed such that the biggest strain which it can exert is less or equal to the yield stress of the resilient means to prevent a lasting deformation of the resilient means by careless use of the tool.

The resilient means is preferably a steel plate, for instance a spring leaf, fastened at one end to the shaft and at the other end to the base, in particular the rotatable knife disc.

The invention will be explained in detail in the following by means of an example of an embodiment and with reference to the drawing, in which
Fig. 1 is a vertical sectional view of a knife holder mounted on a knife disc in a disc mower and in resting position,
Fig. 2 a vertical sectional view of the knife disc shown in Fig. 1 in stressed position, and
Fig. 3 the knife disc seen from above.

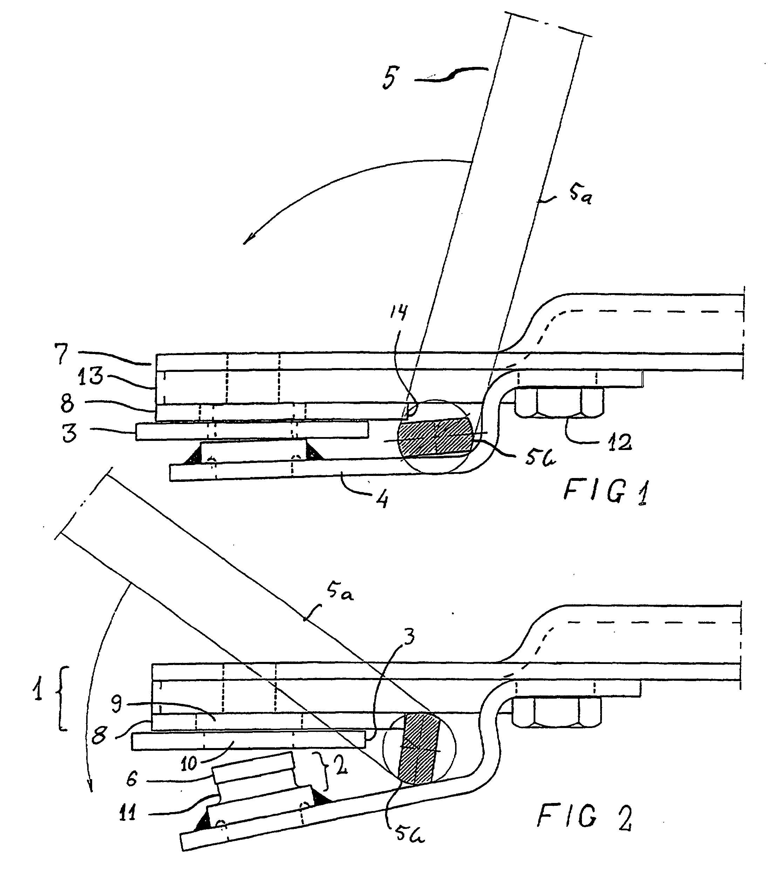

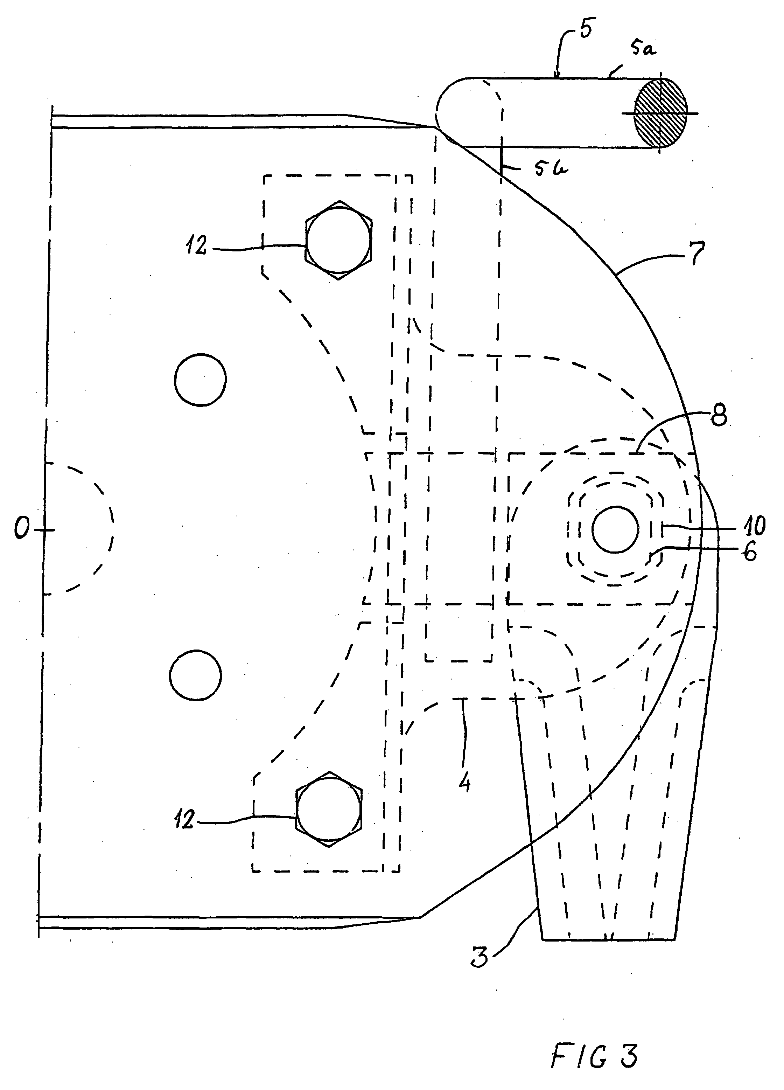

In Figs 1 and 2 a knife holder is shown in resting position and in stressed position, respectively, the knife holder being positioned on a knife disc 7 for a disc mower, in which a shaft 2, which is in parallel with a rotational axis O for the disc, is fastened at one end of a leaf spring 4 of S-shape, the other end being fastened to the knife disc 7 by a nut 12. The shaft 2 is provided with a head 6 and a circular recess 11, in which a knife 3 with a hole 10 is pivotally mounted. The head 6 of the shaft is embedded in a hole 9 in a stop plate 8, which through a counter-sink-block 13 is fastened to the disc 7. The stop plate 8 is designed such that an edge 14 facing the rotational axis of the knife disc 7 extends over the knife edge when it is in its dismantling position (Fig. 3).

When exchanging knives a suitable tool 5 is introduced under the bend of the leaf spring 4. This tool 5 is preferably, on a handle 5a perpendicular thereto, provided with a head 5b with an oblong cross-section, the width of which exceeds and the height of which is smaller than the distance between the leaf spring 4 and the countersink-block 13. When the tool 5 is turned under use of a suitable power, the leaf spring 4 will be stressed and a force directed away from the rotational axis O will influence the head 5b of the tool to make it skid towards the shaft 2. The edge 14 of the stop plate 8 will, however, make the outwards movement of the tool 5 stop and a further turning of the tool 5 will move the shaft 2 away from the stop plate 8. When the distance between the head 6 of the shaft and the countersinking 9 is bigger than the width of the knife, the knife may be dismantled easily and unhindered without the tool abutting the edge of the knife and a new knife may, if desired, be mounted.

Fig. 3 shows the knife holder, seen from above. The leaf spring 4 is fastened to the knife disc 7 by two nuts 12 to ensure, among others, that the leaf spring is not displaced relative to the knife disc during operation.

## Claims

1. A knife holder (1) for a disc mower, said knife holder comprising a shaft (2) for the mounting of a knife (3), said shaft being retained or tightened by a resilient means (4) against a base, the shaft being sufficiently movable away from the base to make an exchange of knife possible by stressing of the resilient means with a tool (5), said knife (3) being removable from the shaft (2) only in a position in which it is turned away from its operating position, **characterized in that** the knife holder is provided with a stop (14) preventing the tool (5) under the influence of the resilient means (4) from substantially skidding and being pressed towards the edge of the knife.

2. A knife holder according to claim 1, **characterized in that** the resilient means comprises a carrier member (4) extending along the base (7), the shaft (2) thus extending from the carrier member (4) to the base (7).

3. A knife holder according to claim 2, **characterized in** being adapted to accommodate the tool (5) between the base (7) and the carrier member (4).

4. A knife holder according to claims 1-3, **characterized in that** the stop is constituted by an edge (14).

5. A knife holder according to claims 1-4, **characterized in that** the base comprises a rotatable knife disc (7) and a stop plate (8) provided thereon, said stop plate being designed such that the head of the shaft may be accommodated in a hole (9) therein.

6. A knife holder according to claim 5, **characterized in that** an edge (14) of the stop plate (8) constitutes the stop for the tool.

7. A knife holder according to any of the preceding claims, **characterized in that** the tool (5) for influencing the resilient means (4) is designed in such a way that the highest tension which may be established by the resilient means is less than or equal to the yield point.

8. A knife holder according to any of the preceding claims, **characterized in that** the resilient means (4) is a leaf spring which at one end is fastened to the shaft (2) and at the other end to the base (7), preferably the rotatable knife disc.

## Patentansprüche

1. Messerhalterung (1) für einen Scheibenmäher, umfassend eine Welle (2) zum Montieren eines Messers (3), welche Welle durch ein federndes Organ (4) gegen eine Basis gehalten oder gespannt ist, wobei die Welle zum Ermöglichen des Messerwechsels durch Spannen des federnden Organs mit einem Werkzeug (5) von der Basis ausreichend weg beweglich ist, welches Messer (3) von der Welle (2) nur in einer von der Betriebsstellung weg gedrehten Stellung auswechselbar ist, **dadurch gekennzeichnet, dass** die Messerhalterung mit einer Arretierung (14) versehen ist, die unter Beeinflussung des federnden Organs (4)das Werkzeug (5) an einem weiteren Gleiten und Drücken gegen die Messerkante hindert.

2. Messerhalterung nach Anspruch 1, **dadurch gekennzeichnet, dass** das federnde Organ ein sich entlang der Basis (7) erstreckendes Trägerelement (4) umfasst, und dass sich die Welle (2) somit vom Trägerelement (4) zur Basis (7) erstreckt.

3. Messerhalterung nach Anspruch 2, **dadurch gekennzeichnet, dass** sie zur Aufnahme des Werkzeuges (5) zwischen der Basis (7) und dem Trägerelement (4) eingerichtet ist.

4. Messerhalterung nach Anspruch 1-3, **dadurch gekennzeichnet, dass** die Arretierung durch eine Kante (14) zustandekommt.

5. Messerhalterung nach Anspruch 1-4, **dadurch gekennzeichnet, dass** die Basis eine rotierbare Messerscheibe (7) und eine auf dieser vorgesehene Stoppplatte (8) umfasst, die derart ausgebildet ist, dass der Wellenkopf in einem Loch (9) darin aufgenommen werden kann.

6. Messerhalterung nach Anspruch 5, **dadurch gekennzeichnet, dass** eine Kante (14) der Stoppplatte (8) die Arretierung für das Werkzeug ausmacht.

7. Messerhalterung nach einem der vorhergehenden Ansprüche, **dadurch gekennzeichnet, dass** das Werkzeug (5) zum Beeinflussen des federnden Organs (4) derart ausgestaltet ist, dass die durch das federnde Organ hergestellte höchste Spannung kleiner oder gleich der Fliessgrenze ist.

8. Messerhalterung nach einem der vorhergehenden Ansprüche, **dadurch gekennzeichnet, dass** das federnde Organ (4) eine Blattfeder ist, deren eines Ende an die Welle (2) und deren anderes Ende an die Basis (7), vorzugsweise die rotierbare Messerscheibe befestigt ist.

## Revendications

1. Dispositif de fixation de lame (1) pour une faucheuse à disque, dispositif de fixation de lame qui comprend un arbre (2) pour le montage d'une lame (3), arbre qui est retenue ou serrée par un moyen flexible (4) contre une base, arbre qui peut se déplacer suffisamment loin de la base pour permettre un échange de lame en tendant le moyen flexible par un outil (5), lame (3) qui ne peut être déplacée depuis l'arbre (2) que dans une position où elle est détournée de sa position d'opération, **caractérisé en ce que** le dispositif de fixation de lame est pourvu d'un boutoir (14) qui empêche l'outil (5) sous l'influence du moyen flexible (4) essentiellement de glisser et d'être poussé vers le côté de la lame.

2. Dispositif de fixation de lame selon la revendication 1, **caractérisé en ce que** le moyen flexible comprend un élément de support (4) s'étendant le long de la base (7), l'arbre (2) ainsi s'étendant depuis l'élément de support (4) à la base (7).

3. Dispositif de fixation de lame selon la revendication 2, **caractérisé** en étant adapté à loger l'outil (5) entre la base (7) et l'élément de support (4).

4. Dispositif de fixation de lame selon les revendications 1-3, **caractérisé en ce que** le butoir est constitué par une arête (14).

5. Dispositif de fixation de lame selon les revendications 1-4, **caractérisé en ce que** la base comprend un disque à lame rotatoire (7) et une plaque d'arrêt (8) pourvue sur celui-ci, plaque d'arrêt qui est conçue de telle façon que la tête de l'arbre peut être logée dans un trou (9) dans celle-là.

6. Dispositif de fixation de lame selon la revendication 5, **caractérisé en ce qu'**une arête (14) de la plaque d'arrêt (8) forme le butoir pour l'outil.

7. Dispositif de fixation de lame selon l'une quelconque des revendications précédentes, **caractérisé en ce que** l'outil (5) pour influer sur le moyen flexible (4) est conçu si bien que la plus haute tension qui puisse être établie par le moyen flexible est inférieure ou égale à la limite d'étirage.

8. Dispositif de fixation de lame selon l'une quelconque des revendications précédentes, **caractérisé en ce que** le moyen flexible (4) est un ressort à feuille qui à l'un bout est fixé à l'arbre (2) et à l'autre bout à la base (7), préférablement le disque à lame rotatoire.
